(19) Europäisches Patentamt
European Patent Office
Office européen des brevets

(11) **EP 4 730 770 A1**

(12) **EUROPEAN PATENT APPLICATION**

(43) Date of publication:
**22.04.2026 Bulletin 2026/17**

(21) Application number: **24306752.7**

(22) Date of filing: **21.10.2024**

(51) International Patent Classification (IPC):
*H04N 19/105* (2014.01)   *H04N 19/11* (2014.01)
*H04N 19/159* (2014.01)   *H04N 19/176* (2014.01)
*H04N 19/182* (2014.01)   *H04N 19/593* (2014.01)

(52) Cooperative Patent Classification (CPC):
**H04N 19/11; H04N 19/105; H04N 19/159;
H04N 19/176; H04N 19/182; H04N 19/593**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **RATH, Gagan Bihari
  35000 RENNES (FR)**
• **LO BIANCO, Federico
  35700 RENNES (FR)**
• **BALCILAR, Muhammet
  35830 BETTON (FR)**
• **RADOSAVLJEVIC, Milos
  35000 RENNES (FR)**

(74) Representative: **Vossius & Partner
Patentanwälte Rechtsanwälte mbB
Siebertstraße 3
81675 München (DE)**

(54) **MATRIX INTRA PREDICTION WITH LOWER COMPLEXITY**

(57)      A device (e.g., a decoder) may obtain a plurality of reference sample arrays associated with a video block. The device may determine an intra-prediction mode associated with the video block. The device may determine, based on a direction of the intra-prediction mode, a reference sample support of the intra-prediction mode, for example, from the plurality of reference sample arrays associated with the video block. The device may perform a matrix-based intra-prediction (MIP) of the video block using the reference sample support of the intra-prediction mode. The device may decode the video block based on the MIP of the video block. In examples, a reference sample support may include a plurality of primary reference samples associated with the intra-prediction mode. The device may determine an MIP matrix associated with the reference sample support and/or perform the MIP of the video block further based on the MIP matrix.

**FIG. 7**

**Description**

**BACKGROUND**

The present application is related to video coding systems that may be used to compress digital video signals, e.g., to reduce the storage and/or transmission bandwidth needed for such signals. Video coding systems may include, for example, block-based, wavelet-based, and/or object-based systems.

**BRIEF SUMMARY**

Systems, methods, and instrumentalities are disclosed for performing a matrix-based intra-prediction (MIP) of a video block.

In example, a device (e.g., a decoder or an encoder) may obtain a plurality of reference sample arrays associated with the video block (e.g., a first video block). The device may determine an intra-prediction mode associated with the video block. The device may determine, based on a direction of the intra-prediction mode, a reference sample support of the intra-prediction mode from the plurality of reference sample arrays associated with the video block. The device may perform an MIP of the video block using the reference sample support of the intra-prediction mode. The device (e.g., a decoder) may decode the video block based on the MIP of the video block.

In examples, a reference sample support may include (e.g., may consist of) a plurality of primary reference samples associated with the intra-prediction mode. The device may determine an MIP matrix associated with the reference sample support and/or perform the MIP of the video block further based on the MIP matrix.

In examples, the device may obtain a plurality of reference sample arrays associated with another video block (e.g., a second video block). The device may determine, based on a direction of an intra-prediction mode associated with the second video block, a reference sample support (e.g., a second reference sample support) of the intra-prediction mode associated with the second video block, and/or the device may perform an MIP of the second video block using the reference sample support of the intra-prediction mode associated with the second video block. The intra-prediction mode associated with the first video block and/or the intra-prediction mode associated with the second video block may be positive.

In examples, the device may perform a first MIP (e.g., MIP with support) for a first video block and perform a second MIP for a second video block, wherein the second MIP may use a full length or a half-length of a reference sample array associated with the second video block based on an intra-prediction mode associated with the second video block being a positive or negative intra-prediction mode.

In examples, the intra-prediction mode associated with the first video block may be a directional prediction mode, and the intra-prediction mode associated with the second video block may be a DC prediction mode or a planar prediction mode.

In examples, the intra-prediction mode associated with the first video block may be a positive intra-prediction mode, and the intra-prediction mode associated with the second video block may be a negative intra-prediction mode.

In one or more examples herein, the device may, based on a condition that the intra-prediction mode associated with the first video block is a positive intra-prediction mode, refrain from performing position dependent prediction compensation (PDPC) for the first video block after completing initial matrix multiplications associated with the first MIP.

In examples, the device (e.g., a decoder) may receive an indication that indicates whether the first MIP or the second MIP is to be used for the plurality of candidate modes in a most probably modes (MPM) list. The device may determine that the intra-prediction mode associated with the first video block is a candidate mode of the plurality of candidate modes in the MPM list. The device may determine to use the first MIP for a prediction of the first video block based on the indication.

In examples, the device (e.g., the decoder) may receive an indication that indicates whether the first MIP or the second MIP is to be used in association with the intra-prediction mode associated with the first video block. The device may, based on the indication, determine to use the first MIP for the first video block.

In one or more examples herein, the device may, based on a condition that the intra-prediction mode associated with the first video block is a positive intra-prediction mode, refrain from performing PDPC, for the first video block.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more examples as described herein.
FIG. 2 shows an example video encoder according to one or more examples as described herein.
FIG. 3 shows an example video decoder according to one or more examples as described herein.
FIG. 4 shows an example where reference array lengths may depend on mode value(s).
FIG. 5 shows example reference samples on the first reference line.
FIG. 6 shows an example interpolation of a predictor sample using multiple (e.g., the six) nearest reference samples.
FIG. 7 shows examples of a reference sample support for a positive prediction direction.
FIG. 8 shows examples of a reference sample support for a negative prediction direction.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

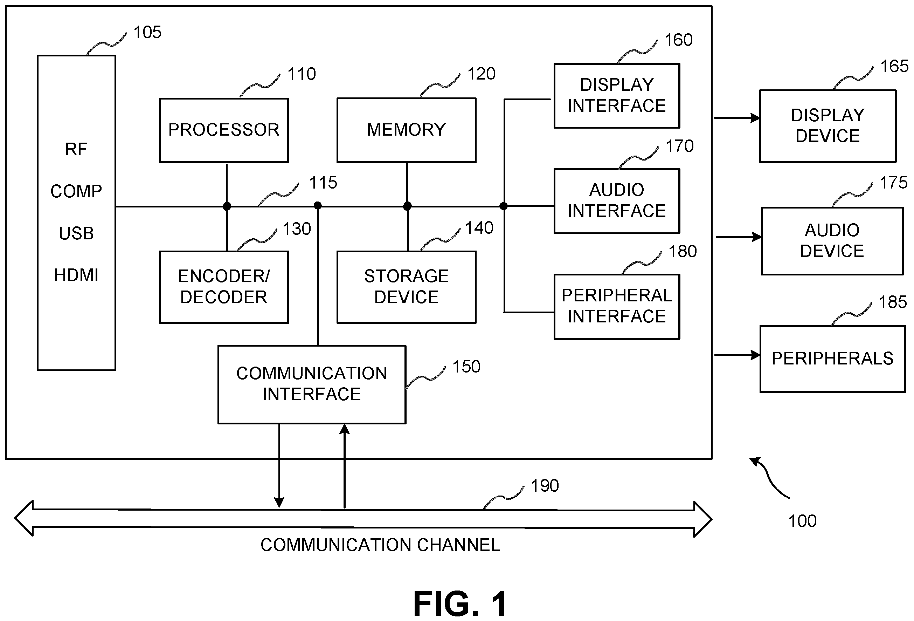

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

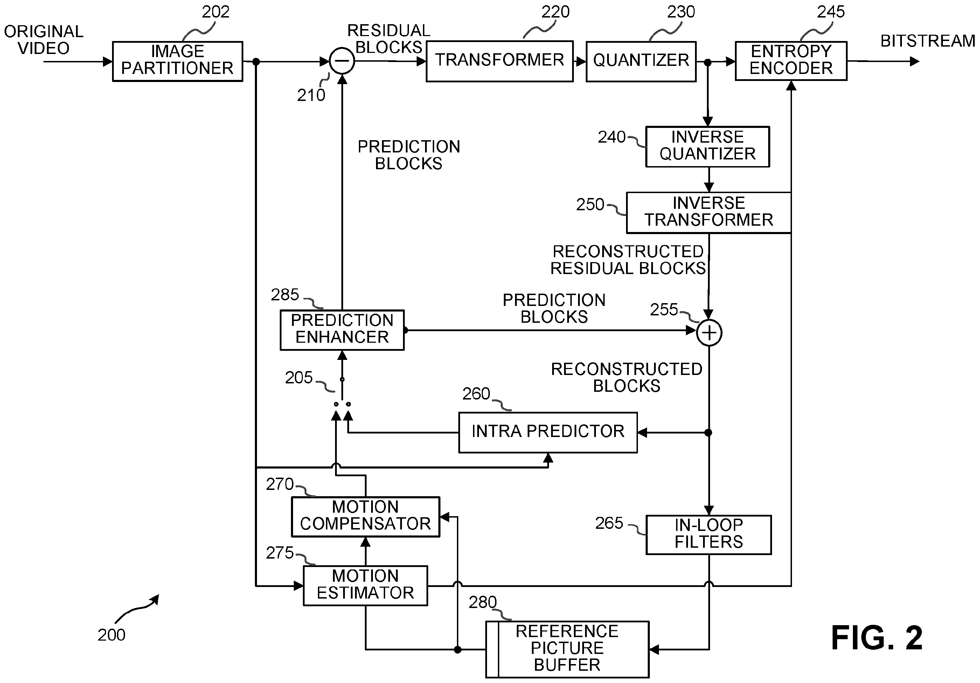

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (WC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

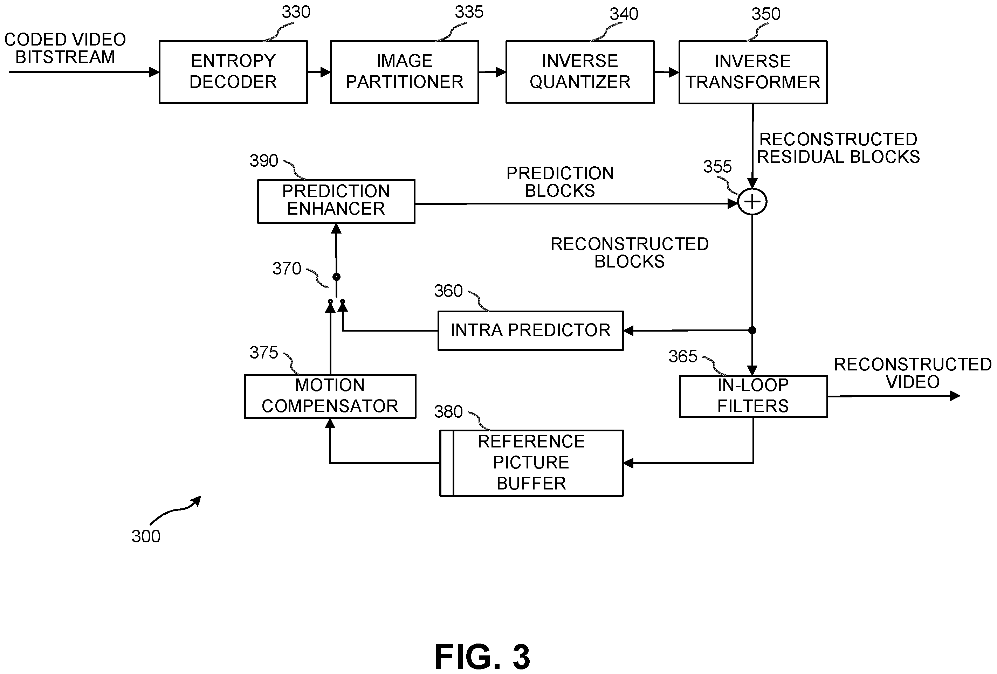

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C, *Cb, Cr).*

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Systems, methods, and instrumentalities are disclosed for performing a matrix-based intra-prediction (MIP) of a video block.

In example, a device (e.g., a decoder or an encoder) may obtain a plurality of reference sample arrays associated with the video block (e.g., a first video block). The device may determine an intra-prediction mode associated with the video block. The device may determine, based on a direction of the intra-prediction mode, a reference sample support of the intra-prediction mode from the plurality of reference sample arrays associated with the video block. The device may perform an MIP of the video block using the reference sample support of the intra-prediction mode. The device (e.g., a decoder) may decode the video block based on the MIP of the video block.

In examples, a reference sample support may include (e.g., may consist of) a plurality of primary reference samples associated with the intra-prediction mode. The device may determine an MIP matrix associated with the reference sample support and/or perform the MIP of the video block further based on the MIP matrix.

In examples, the device may obtain a plurality of reference sample arrays associated with another video block (e.g., a second video block). The device may determine, based on a direction of an intra-prediction mode associated with the second video block, a reference sample support (e.g., a second reference sample support) of the intra-prediction mode associated with the second video block, and/or the device may perform an MIP of the second video block using the reference sample support of the intra-prediction mode associated with the second video block. The intra-prediction mode associated with the first video block and/or the intra-prediction mode associated with the second video block may be positive.

In examples, the device may perform a first MIP (e.g., MIP with support) for a first video block and perform a second MIP for a second video block, wherein the second MIP may use a full length or a half-length of a reference sample array associated with the second video block based on an intra-prediction mode associated with the second video block being a positive or negative intra-prediction mode.

In examples, the intra-prediction mode associated with the first video block may be a directional prediction mode, and the intra-prediction mode associated with the second video block may be a DC prediction mode or a planar prediction mode.

In examples, the intra-prediction mode associated with the first video block may be a positive intra-prediction mode, and the intra-prediction mode associated with the second video block may be a negative intra-prediction mode.

In one or more examples herein, the device may, based on a condition that the intra-prediction mode associated with the first video block is a positive intra-prediction mode, refrain from performing position dependent prediction compensation (PDPC) for the first video block after completing initial matrix multiplications associated with the first MIP.

In examples, the device (e.g., a decoder) may receive an indication that indicates whether the first MIP or the second MIP is to be used for the plurality of candidate modes in a most probably modes (MPM) list. The device may determine that the intra-prediction mode associated with the first video block is a candidate mode of the plurality of candidate modes in the MPM list. The device may determine to use the first MIP for a prediction of the first video block based on the indication.

In examples, the device (e.g., the decoder) may receive an indication that indicates whether the first MIP or the second MIP is to be used in association with the intra-prediction mode associated with the first video block. The device may, based on the indication, determine to use the first MIP for the first video block.

In examples, the device may, based on a condition that the intra-prediction mode associated with the first video block is a positive intra-prediction mode, refrain from performing PDPC, for the first video block.

Matrix based intra prediction (MIP) may be an intra prediction tool that replaces some directional modes (e.g., some conventional directional modes). In examples, MIP may improve the coding efficiency. In some examples, the complexity of the MIP prediction method may be high (e.g., due to large matrix multiplications). For a direction mode that is replaced, there may be various matrices defined for different candidate block sizes (e.g., for each conventional direction relaced, there are matrices defined for all candidate block sizes which are obtained by training with some standard video datasets), for example demanding high memory storage for the matrices (e.g., all the matrices) besides the computational complexity in prediction. In one or more examples herein, some techniques may be used to reduce the complexity of prediction and/or the storage requirement, for example, by utilizing the directionality of modes.

In one or more examples herein, matrix dimensions may be reduced, for example, by utilizing the directionality of the prediction modes. For one or more (e.g., all) positive vertical intra prediction modes, certain reference samples on top of a current block (e.g., only the required reference samples on top of a current block) may be used as the input vector for multiplication. For one or more (e.g., all) positive horizontal prediction modes, certain reference samples on the left of a current block (e.g., only the required reference samples on the left of a current block) may be used as the input vector for multiplication. The initial prediction may be followed by PDPC, for example, to smoothen out the predicted values at the block boundary(ies). For one or more (e.g., all) negative prediction modes, certain reference samples (e.g., the required reference samples) on top and left of a current block may be used (e.g., as the input vector for multiplication). The reference samples used in one or more examples as described herein (e.g., the required samples in all cases) may be localized based on the direction associated with a prediction mode (e.g., the replaced prediction mode).

A lower complexity MIP may be used in one or more examples herein.

MIP may be used as an intra prediction tool to predict a current block using reference samples in a template (e.g., using already decoded samples on top and left of the block, formatted as a template), through matrix multiplications. The template values may be multiplied with matrices (e.g., suitable sized matrices) to obtain prediction values for the current block pixels, for example, as follows:

$$P(x, y) = \sum_k F(x, y, k) * r(k) \text{ for } 0 \leq x < W, 0 \leq y < H,$$

where the reference samples in the template may be denoted as r, F(x,y) may be used to denote the matrix of weights, k may denote the index of a reference sample in the template, and W and H may denote the width and the height of the current block, respectively. The matrix multiplication (e.g., for MIP2) may be expressed, for example, as:

$$s(i) = \sum_k F'(i, k) * r(k) \text{ for } 0 \leq i < (W * H), \text{ ................}(1)$$

$$P(x, y) = s(W * y + x), 0 \leq x < W, 0 \leq y < H \text{ ...............}(2)$$

where F' may be used to denote a two dimensional matrix having the column dimension W*H. The matrix product in Equation (1) may result in a column vector s, which is then reshaped to the size of the current block in Equation (2). The size of the input column vector r, which is, for example, equal to the number of columns in the matrix F', may depend on the template size used.

In examples, the prediction (e.g., the MIP prediction) may be used for certain block size(s) (e.g., block size(s) with both width and height up to 32 except for 4x32,32x4, 8x32 and 32x8). The template size may be a first value for certain blocks (e.g., the template size may be 2 for blocks with both width and height up to 16), and/or it may be used for certain modes (e.g., only used for modes 0, 1, and (2+2*k), k = 0, 1, ...32, that is, every other even indexed mode). Intra prediction may support multiple prediction modes that may be indexed (e.g., 67 prediction modes indexed as 0, 1, 2...66). For example, the modes which are used with MIP for the above block sizes may include (e.g., only include) 0,1, 2, 4, 6, ..., 66. For other blocks, template size may be set to a second value (e.g., 1) and/or may be used for certain modes (e.g., modes 0, 1, and (2+4*k), k= 0, 1, ..., 16, that is, every $4^{th}$ even indexed mode). For example, the modes which are used with MIP for block sizes 16x32, 32x16 and 32x32 may be 0, 1, 2, 6, ...,66. With these blocks, prediction may be performed for certain positions (e.g., may be only performed for 16x16 positions), and the rest of the samples may be generated through interpolation (e.g., by bilinear interpolation). For one or more (e.g., all) block sizes, block shape and/or mode-based symmetry may be used. Reference array lengths may be set to W+1 and H+1 for modes with negative directions (e.g., the modes greater than 18 and less than 50) and may be set to 2*W+1 and 2*H+1 otherwise (i.e., for modes with positive directions).

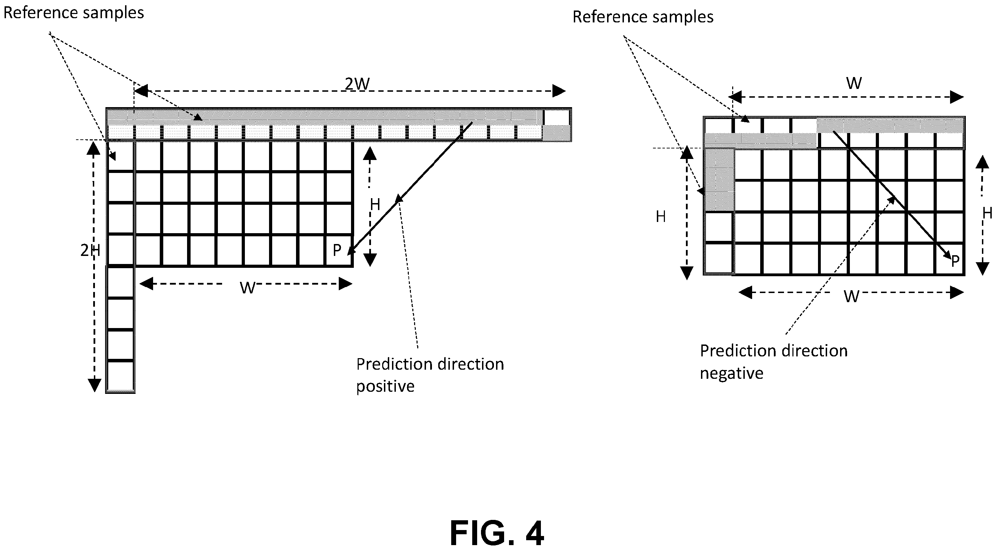

An MIP (e.g., an MIP that may or may not use a reference sample support) may use a full length or a half-length of reference sample array(s) associated with a block based on an intra-prediction mode associated with the block being a positive or negative intra-prediction mode, for example, as shown in FIG. 4. FIG. 4 shows an example where reference array lengths may depend on mode value(s). For example, for positive directions (e.g., modes [2-18] and [50-66]), the lengths may be 2W +1 and 2H+1 (left figure). For negative directions (e.g., modes [19-49]), the lengths may be W+1 and H+1 (right figure).

The matrices (e.g., which may be referred to as filters) may be obtained, for example, by training with BVI sequences (e.g., composing of 800 sequences with diverse resolutions).

The template size may refer to the number of rows and columns of reference arrays used in the multiplication. In a first case, for a candidate block of size WxH, with a positive mode and a template width 2, the size of the input vector r may be (4W+4H+4), and the size of the matrix F' may be (WH) X (4W+4H+4) in the case when the full block is predicted by the matrix multiplication. In a second case, for a candidate block of size WxH with a negative mode and a template width 2, the size of the input column r may be (2W +2H + 4), and the size of the matrix F' may be (WH)x(2W+2H+4) in the case the full block is predicted by the matrix multiplication. In the first case, the number of multiplications required for predicting the target pixels (e.g., each target pixel) may be (4W+4H+4), whereas in the second case the number of multiplications required for predicting the target pixels (e.g., each target pixel) may be (2W+2H+4). These matrices may denote filters for one positive or one negative prediction direction; other matrices may be defined for other positive or negative prediction directions respectively. For a LUMA block size of 16x16, for example, the number of multiplications required per pixel may be 132 and 68 for a positive or a negative mode respectively. A directional prediction, in some examples, may use 6 multiplications per pixel (e.g., only 6 multiplications per pixel as it uses a six-tap filter for reference sample interpolation). In some examples, MIP may be computationally complex. In one or more examples as described herein, a lower complexity MIP (e.g., MIP with support) may be used. The lower complexity MIP may reduce the complexity of MIP. In some examples, directional intra prediction may be used.

Basic directional intra prediction may be used in some examples (e.g., DIMD, TIMD, SGPM and TMRL may use the basic intra prediction method). In some examples (e.g., intra template matching (IntraTMP), intra block copy (IBC), and matrix intra prediction (MIP) which do not include the basic intra prediction method), the lower complexity MIP may or may not be used.

Feature(s) associated with directional intra prediction are provided herein. Angular prediction modes (e.g., 65 angular prediction modes) may be used for intra prediction of a (e.g., any) target block. The modes may be associated with prediction directions ranging from 45 degrees to -135 degrees (e.g., in a clockwise manner). Some angular modes may be replaced with an equal number of wide angular modes defined beyond the above range. The angular modes may be replaced with wide angular modes based on the block shape. The modes may be referred to as horizontal if they refer to the directions below the diagonal direction (e.g., from top left towards bottom right), and may be referred to as vertical otherwise. The modes may be referred to as positive or negative depending on which side of the (e.g., purely) horizontal (e.g., below or above purely horizontal) or (e.g., purely) vertical (e.g., to the right or left of the purely vertical) direction to which they belong. The directions below and including (e.g., purely) horizontal, and to the right of and including (e.g., purely) vertical may be referred to as positive directions. The remaining directions may be referred to as negative directions.

For a given target block to be intra predicted, the encoder, or the decoder, may construct one or more (e.g., two) reference arrays (e.g., a reference array on the top and a reference array on the left of the target block). The reference samples may be taken from the decoded samples on top, top-right, left, left-bottom, and/or top-left decoded blocks. If some of the samples on the top or the left are not available (e.g., because of the corresponding coding units (CUs) being not in the same slice, or the current CU being at a frame boundary, etc.), reference sample substitution may be performed. In reference sample substitution, the missing samples may be copied from the available samples in a clockwise direction. The reference samples may be filtered with the low-pass filter [1 2 1]/4 (e.g., depending on the block size and the prediction mode). For example, the reference samples may be filtered if the prediction mode is planar and the block size is greater than or equal to 8x8, or if the block size is greater than 4x4 and the prediction mode has integer slope (e.g., the absolute value of the angle parameter *predIntraAngle* is a multiple of 32, so the predictor samples are at integer positions for all target pixels). If the prediction mode does not have integer slope but satisfies the filtering condition, a flag (e.g., *interpolationFlag)* may be enabled. The value of the *interpolationFlag* may determine whether to use a cubic filter or a smoothing filter during the interpolation. If the flag is enabled, a smoothing filter may be used. If the flag is disabled, a cubic filter may be used. For the chroma signals, the reference samples may not be filtered. Predictions based on multiple reference lines (MRL) may be supported. The first reference line may be filtered. For example, the first reference line may or may not be filtered depending on the target block size and the prediction direction. Other reference lines may not be filtered. The prediction with a (e.g., any) reference line other than the first one (e.g., reference lines with an index multiRefIdx > 0) may use a cubic filter for interpolation.

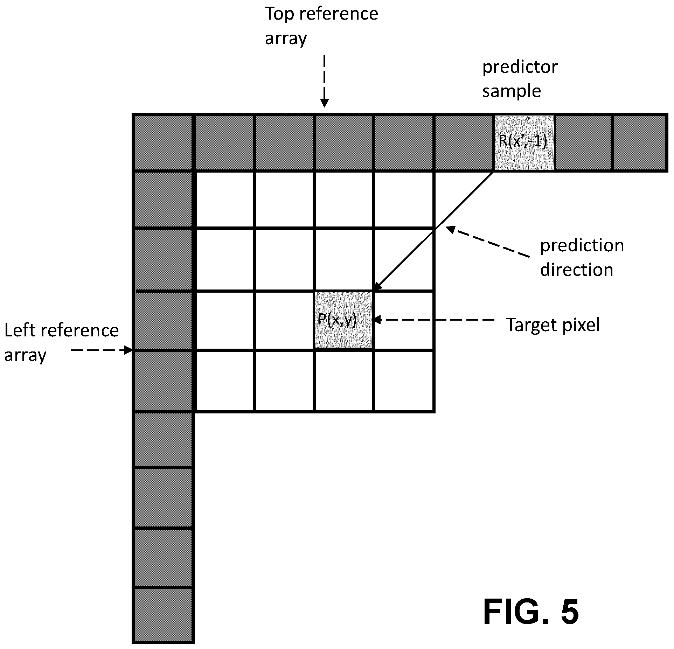

FIG. 5 shows example reference samples on the first reference line. For example, for a target block with width W pixels and height H pixels, the top reference array may have 2W+1 samples and the left reference array may have 2H+1 samples.

For a (e.g., any) target pixel, the reference sample may be referred to as the target pixel's predictor. If the prediction mode has integer slope, the predictor for a (e.g., every) target pixel may coincide with a reference sample. In this case, the corresponding reference sample may be used as the predictor (e.g., without interpolation filtering). For other angular prediction modes (e.g., all other angular prediction modes), for a Luma signal, the nearest six reference samples of the predictor may be used for interpolating the predictor, for example, as follows:

$$P_{pred}(x,y) = (f[0] * P0 + [[1] * P1 + /[2] * P2 + f[3] * P3 + f[4] * P4 + f[5] * P5 + 128) >> 8$$

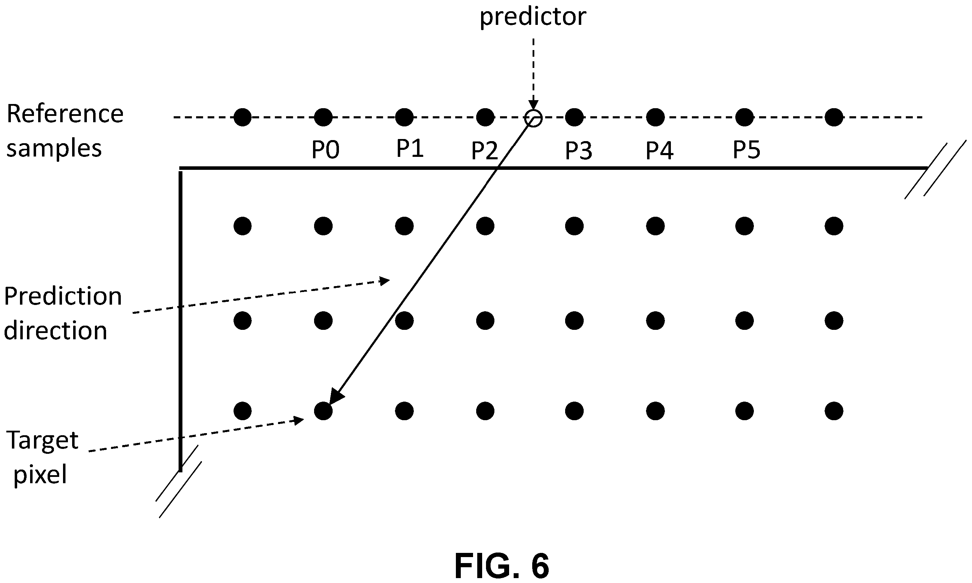

where $f[i]$ denotes the ith filter coefficient and P0-P5 represent the nearest 6 reference samples to the predictor (e.g., as shown in FIG. 6). The filter coefficients $f[i]$, $i = 0,1,2,3,4,5$ may be normalized with integral values (e.g., so that their sum is equal to 256). The chosen filter may depend on the value of the flag *interpolationFlag*. The value of the interpolation Flag may be decided based on the block size and prediction direction. If *interpolationFlag* is enabled, a smoothing filter may be used). If *interpolationFlag* is disabled, a cubic filter may be used. The specified cubic filter may have both negative and positive coefficient values. In this case, a clipping operation may be performed to keep the predicted value within the valid dynamic range of the Luma component, for example, as follows:

$$P_{pred}(x,y) = Clip((f[0] * P0 + [[1] * P1 + f[2] * P2 + f[3] * P3 + f[4] * P4 + f[5] * P5 + 128) >> 8)$$

FIG. 6 shows an example interpolation of a predictor sample using the six nearest reference samples. The interpolation filter may be a 6-tap cubic filter or smoothing filter (e.g., depending on the value of the flag *interpolationFlag*).

For a chroma target block, the two nearest (e.g., only the two nearest) reference samples P2 and *P3* may be used for interpolating the predictor. The predictor value may be linearly interpolated, for example, as follows:

$$P_{pred}(x,y) = ((32 - deltaFrac) * P2 + deltaFrac * P3 + 16) >> 5;$$

where, *deltaFrac, deltaFrac* $\in \{0,1,2 ... 31\}$ denotes the distance of the predictor sample from *P2*.

For positive prediction directions (e.g., including the purely vertical and horizontal directions), the initial prediction values (e.g., obtained as described herein) may be followed by position-dependent prediction compensation (PDPC) to smooth out discontinuities at the block boundaries.

MIP may be used in some examples where the PLANAR mode (e.g., indexed as mode 0), the DC mode (e.g., indexed as mode 1), and some even indexed directional modes are replaced with MIP.

In one or more examples herein, the complexity of MIP may be reduced. In one or more examples herein, MIP (e.g., a lower complexity MIP) may use a reference sample support (e.g., to reduce the complexity of the matrix multiplication while aiming for a similar prediction performance efficiency, comparing to MIP2). A reference sample support may include a range of reference samples associated with a prediction mode (e.g., the range of reference samples may be the reference samples required for predicting all the pixels in a current block with a given prediction mode).

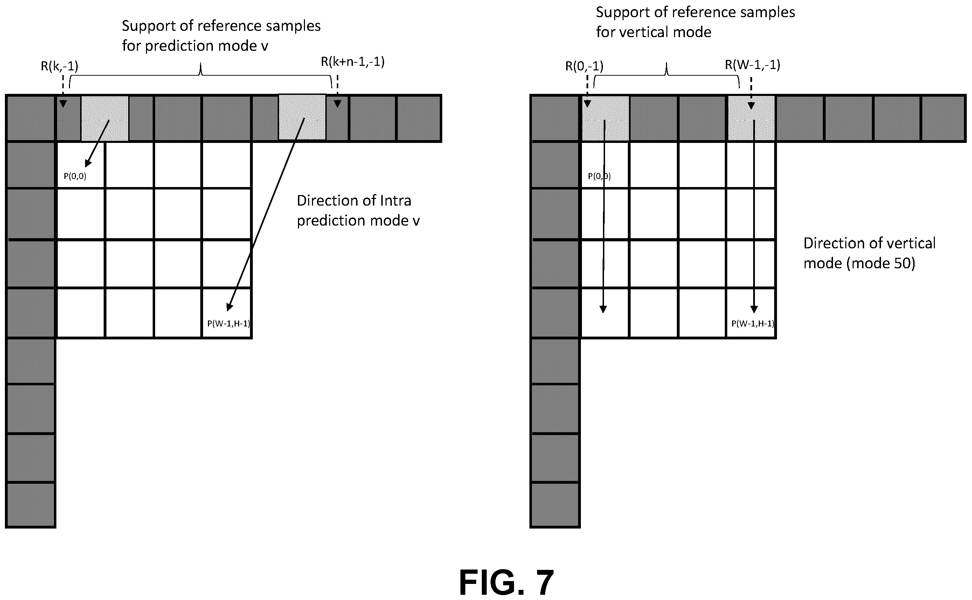

FIG. 7 shows examples of a reference sample support for a positive prediction direction. The predictor samples, as shown in FIG. 7, may be on the top reference array (e.g., may be always on the top reference array). The example on the left side in FIG. 7 is for a prediction mode V. The example on the right side in FIG. 7 is for the vertical mode (e.g., mode 50).

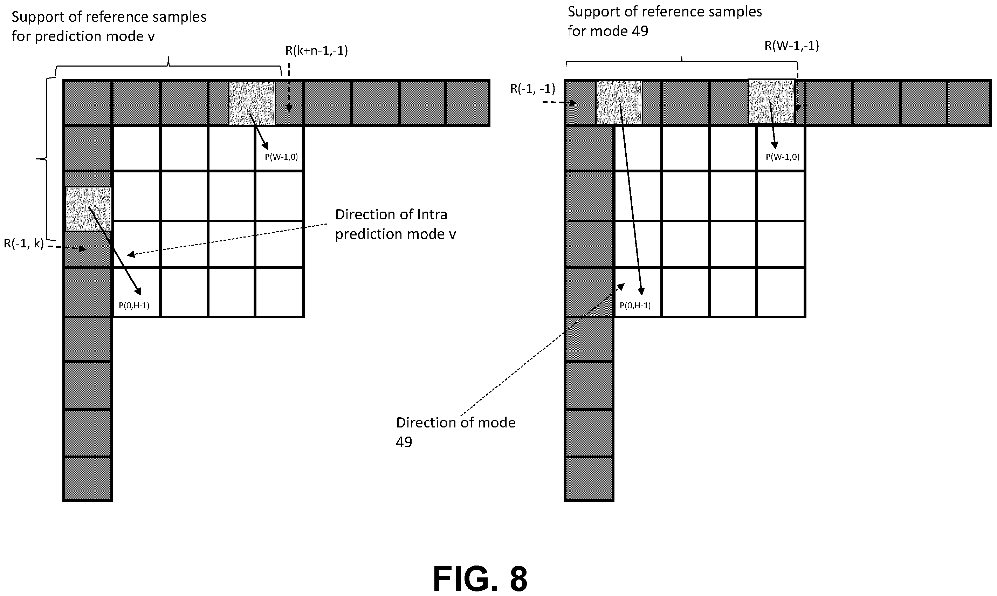

FIG. 8 shows examples of a reference sample support for a negative prediction direction. The predictor samples, as shown in FIG. 8, may be on the top and the left reference arrays (e.g., may be always on both the top and the left reference arrays). The example on the left side in FIG. 8 is for a prediction mode V. The example on the right side in FIG. 8 is for the mode 49.

A device (e.g., an encoder and/or a decoder) may determine a reference sample support of an intra-prediction mode. For a certain prediction direction, the primary reference samples may be within a support for an intra prediction mode of that prediction direction (e.g., the primary reference samples may be within its support as the mode is associated with a certain directionality), for example, as shown in FIG. 7 and/or FIG. 8. A device may determine, based on a direction of the intra-prediction mode, the reference sample support of the intra-prediction mode. The reference samples in the reference sample support may have a higher level of correlation with the target pixel values than the remaining reference samples in the reference sample array(s) of a current block. Some reference samples adjacent to the support may be correlated to the target pixel values (e.g., they may have a certain level of correlation with the target pixel values). The further away a reference sample is from the support, the less correlated the reference sample is to the target pixel values (e.g., as we move away from the support, the reference samples may be less and less correlated with the pixels in a current block). The support of a prediction mode may be finite and it may not include all reference samples on the reference arrays (e.g., the reference sample support may include the least number of reference samples that are required to predict all the pixels in a current block with a given prediction mode).

The device may determine one or more reference sample arrays of a block (e.g., as shown in FIG. 7, the top and left gray arrays are the reference arrays of the block). The device may determine that the vertical prediction mode is to be used for the prediction of the block (e.g., a video block). As shown in FIG. 7, for example, the support for the vertical prediction mode (e.g., mode 50) may include (e.g., may only include) the reference samples on top of a block (e.g., from R(0,-1) to R(W-1, -1)). In some examples, including the references samples from below left (on left reference array) or top right (on top reference array) portions may not contribute much to the prediction accuracy (e.g., as the aim is to capture the vertical directionality). In examples, the samples on the left (e.g., on the left reference sample array of the current block) may be used in a subsequent PDPC step (e.g., for eliminating one or more discontinuities at the left boundary. The device may perform an MIP of the block using the reference sample support of the intra-prediction mode. For example, a matrix (e.g., a matrix associated with an MIP) may be determined based on a reference sample support of an intra-prediction mode (e.g., the matrices for the respective predictions may be designed based on only the respective supports).

In some examples, the example on the left of FIG. 7 may be used to show a reference sample support of the prediction mode V that is a positive intra prediction mode associated a first vide block, and/or the example on the right of FIG. 7 may be used to show a reference sample support of the vertical prediction mode that is a positive intra prediction mode associated with a second video block.

MIP with support may be different from an MIP as described in some examples herein. The prediction process with matrix multiplication (e.g., for the MIP with support) may use a prediction process with matrix multiplication as described in one or more examples herein (e.g., the prediction process with matrix multiplication may remain the same) but the multiplication may use a reduced dimension vector r:

$$ s(i) = \sum_{k \in S} F'(i,k) * r(k) \text{ for } 0 \le i < (W*H), \ldots\ldots\ldots\ldots(3) $$

$$ P(x,y) = s(W*y+x), 0 \le x < W, 0 \le y < H \ldots\ldots\ldots(4) $$

In Equation (3) above, S may denote the set of support reference samples (e.g., the set of reference samples in the reference sample support of an intra-prediction mode). The difference from an example matrix multiplication (e.g., the original matrix multiplication equations (1) and (2)) may include the lower dimensionality of input vector r and/or the cardinality of set S (e.g., the input vector r may be the cardinality of set S). The support of a prediction mode may depend on the associated prediction direction. In examples, the cardinality of the set S above may be a variable number, but the variation is not limited to using the full size or half size reference arrays (e.g., as in some examples including MIP2). In the case (e.g., MIP2) where the variation is limited to using the full size or half size reference arrays, the cardinality of set S is the same for the positive nodes (e.g., all positive modes) or for the negative nodes (e.g., all negative modes) for a given current block size. Here, the cardinality of set S may be different for different positive or negative prediction modes for a given block size.

In one or more examples as described herein, a lower dimensionality of the input vector r may mean and/or result in a lower number of columns for the matrix F'. Thus, a (e.g., each) target pixel may require a smaller number of multiplications than some examples herein (e.g., in MIP 2). Only in some special modes (e.g., for diagonal mode 34, which is a negative mode), the support of the mode may be close to the same as in some examples (e.g., the case such as MIP2), for example. In those cases (e.g., for diagonal mode 34, which is a negative mode), the MIP with support may require similar order of multiplications; otherwise, in most of the prediction modes, especially with positive prediction modes, using the support may lead to significant reduction in the dimensionality of matrices F' and r, and thus the number of multiplications required per pixel may be significantly lower.

Although one or more examples herein illustrate cases where the template width is 1 (e.g., the number of reference lines used in the prediction is 1). In the case when the template width is 2, the support may be extended to the second reference line in an analogous manner.

Matrices may be trained with sizes determined by the supports of prediction modes where the training may include the PDPC for positive prediction modes.

Examples (e.g., design examples for inclusion of the prediction as described herein in various video coding standards) may be provided herein. In some cases, the prediction as described in one or more examples herein may apply to luma blocks (e.g., luma blocks only), and/or the chroma blocks may be predicted (e.g., in the usual manner) using such prediction or not using the prediction.

In examples (e.g., embodiment 1), the MIP with support may replace another MIP (e.g., MIP2) for directional modes. For PLANAR and DC modes, the matrices such as ones used in MIP 2 may be used for prediction. For directional candidate modes, matrices may be obtained for corresponding sizes of reference support. Depending on the current block size, either every even directional mode (modes 2, 4, 6, ..., 66), or every alternate even directional mode (modes 2, 6, ..., 66) may be predicted with MIP with support by replacing MIP2. For example, for the candidate prediction modes with any block size, the filters may be replaced with the new filters associated with MIP with support.

In examples (e.g., embodiment 2), MIP with support may replace MIP2 for positive prediction modes only (e.g., candidate modes in [2-18] and modes [50-66]). For negative prediction modes (e.g., candidate modes in [19-49]), MIP2 may be applied.

In examples (e.g., embodiment 3), else the same as in embodiment 1 or embodiment 2, but PDPC may not be applied, for example, after the initial matrix multiplications for positive directional modes.

In examples (e.g., embodiment 4), MIP with support may be used along with available methods (e.g., directional prediction mode(s), MIP, or MIP2) but may be applied only on a small set of modes, such as the directional modes in the most probable modes (MPM) list. An indication (e.g., a flag called *mipsFlag* (MIP with support)) may be encoded to indicate if MIP with support or the available methods is used to predict a current block for a candidate mode in the MPM list.

In examples (e.g., embodiment 5), MIP with support may be used along with MIP2 for all directional modes. An indication (e.g., a flag called *mipsFlag* (matrix intra prediction with support)) may be encoded to indicate if MIP with support or available methods (the directional prediction, MIP, or MIP 2) is used to predict a current block.

In examples (e.g., embodiment 6), else the same as embodiments 4-5 but no PDPC may be performed with MIP with support in the case of positive prediction modes.

In examples (embodiment 7), the decision to incorporate the proposed reduced complexity matrix intra prediction (e.g., MIP with support), either replacing the available matrix intra prediction (e.g., MIP or MIP2), or being an addition on top of the available methods may be encoded in a slice/picture/sequence header (e.g., to inform the decoder if the method is applied in the slice/picture/sequence).

In a variant of some or all the examples (e.g., embodiments 1-7), prediction may be based on a bigger subset of reference samples (e.g., instead of only the support) than the reference sample support. For example, the support may be enhanced by a fixed number of extra samples in either direction (e.g., downwards or rightwards); or some samples (e.g., the ones directly above and directly left of the current block) may be included (e.g., automatically included); or only a ratio (e.g., a small ratio) of reference samples outside the support may be included (e.g. one every two or four samples). This variant may aim at slightly increasing the complexity in order to have a potentially more accurate prediction.

MIP with support may have the potential for significantly reducing the computational complexity and/or the storage requirements associated with the matrix based directional prediction.

MIP with support may be incorporated in various video coding standards (e.g., depending on the coding gain performance).

Encoding tools and techniques (e.g., as illustrated in FIG. 2) including one or more of quantization, entropy coding, inverse quantization, transformation, and differential coding may be used to enable one or more examples as described herein in the encoder. These encoding tools and techniques may be used to enable one or more of: performing an MIP of a video block; obtaining a plurality of reference samples (e.g., reference sample array(ies)) associated with the video block; determining an intra-prediction mode for the video block; determining one or more (e.g., a subset) of the plurality of reference samples based on the intra-prediction mode (e.g., the subset of the plurality of reference samples may vary based on a direction of the intra-prediction mode); determining the subset (e.g., a reference sample support) of the plurality of reference samples based on a direction of the intra-prediction mode; performing an MIP of the video block using the subset of the reference samples; encoding the video block based on the MIP of the video block; determining that a reference sample support includes (e.g., consists of) a plurality of primary reference samples associated with the intra-prediction mode; determining an MIP matrix associated with the reference sample support and/or perform the MIP of the video block further based on the MIP matrix; obtaining a plurality of reference sample arrays associated with another video block (e.g., a second video block); determining that the intra-prediction mode associated with the first video block and/or the intra-prediction mode associated with the second video block are positive; determining, based on a direction of an intra-prediction mode associated with the second video block, a reference sample support (e.g., a second reference sample support) of the intra-prediction mode associated with the second video block; performing an MIP of the second video block using the reference sample support of the intra-prediction mode associated with the second video block; performing a first MIP (e.g., MIP with support) for a first video block and performing a second MIP for a second video block (e.g., the intra-prediction mode associated with the first video block may be a directional prediction mode, and the intra-prediction mode associated with the second video block may be a DC prediction mode or a planar prediction mode; and/or the intra-prediction mode associated with the first video block may be a positive intra-prediction mode, and the intra-prediction mode associated with the second video block may be a negative intra-prediction mode); performing the second MIP that uses a full length or a half-length of a reference sample array associated with the second video block based on an intra-prediction mode associated with the second video block being a positive or negative intra-prediction mode; based on a condition that the intra-prediction mode associated with the first video block is a positive intra-prediction mode, refraining from performing PDPC for the first video block after completing initial matrix multiplications associated with the first MIP; sending an indication that indicates whether the first MIP or the second MIP is to be used for the plurality of candidate modes in an MPM list; determining that the intra-prediction mode associated with the first video block is a candidate mode of the plurality of candidate modes in the MPM list; determining to use the first MIP for a prediction of the first video block based on the determination that the intra-prediction mode associated with the first video block is a candidate mode of the plurality of candidate modes in the MPM list; sending an indication that indicates whether the first MIP or the second MIP is to be used in association with the intra-prediction mode associated with the first video block; based on a condition that the intra-prediction mode associated with the first video block is a positive intra-prediction mode, refraining from performing PDPC, for the first video block; etc.

Decoding tools and techniques (e.g., as illustrated in FIG. 3) including, for example, one or more of entropy decoding, inverse quantization, inverse transformation, and differential decoding may be used to enable one or more examples as described herein. For example, these decoding tools and techniques may be used to enable one or more of: performing an MIP of a video block; obtaining a plurality of reference samples (e.g., reference sample array(ies)) associated with the video block; determining an intra-prediction mode for the video block; determining one or more (e.g., a subset) of the plurality of reference samples based on the intra-prediction mode (e.g., the subset of the plurality of reference samples may vary based on a direction of the intra-prediction mode); determining the subset (e.g., a reference sample support) of the plurality of reference samples based on a direction of the intra-prediction mode; performing an MIP of the video block using the subset of the reference samples; decoding the video block based on the MIP of the video block; determining that a reference sample support includes (e.g., consists of) a plurality of primary reference samples associated with the intra-prediction mode; determining an MIP matrix associated with the reference sample support and/or perform the MIP of the video block further based on the MIP matrix; obtaining a plurality of reference sample arrays associated with another video block (e.g., a second video block); determining that the intra-prediction mode associated with the first video block and/or the intra-prediction mode associated with the second video block are positive; determining, based on a direction of an intra-prediction mode associated with the second video block, a reference sample support (e.g., a second reference sample support) of the intra-prediction mode associated with the second video block; performing an MIP of the second video block using the reference sample support of the intra-prediction mode associated with the second video block; performing a first MIP (e.g., MIP with support) for a first video block and performing a second MIP for a second video block (e.g., the intra-prediction mode associated with the first video block may be a directional prediction mode, and the intra-prediction mode associated with the second video block may be a DC prediction mode or a planar prediction mode; and/or the intra-prediction mode associated with the first video block may be a positive intra-prediction mode, and the intra-prediction mode associated with the second video block may be a negative intra-prediction mode); performing the second MIP that uses a full length or a half-length of a reference sample array associated with the second video block based on an intra-prediction mode associated with the second video block being a positive or negative intra-prediction mode; based on a condition that the intra-prediction mode associated with the first video block is a positive intra-prediction mode, refraining from performing PDPC for the first video block after completing initial matrix multiplications associated with the first MIP; receiving an indication that indicates whether the first MIP or the second MIP is to be used for the plurality of candidate modes in an MPM list; determining that the intra-prediction mode associated with the first video block is a candidate mode of the plurality of candidate modes in the MPM list; determining to use the first MIP for a prediction of the first video block based on the indication; receiving an indication that indicates whether the first MIP or the second MIP is to be used in association with the intra-prediction mode associated with the first video block, and, based on the indication, determining to use the first MIP for the first video block; based on a condition that the intra-prediction mode associated with the first video block is a positive intra-prediction mode, refraining from performing PDPC, for the first video block; etc.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. Video data (e.g., a bitstream) that may include one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A device for video decoding, comprising:
   a processor configured to:

   obtain a plurality of reference sample arrays associated with a video block;
   determine an intra-prediction mode associated with the video block;
   determine, based on a direction of the intra-prediction mode, a reference sample support of the intra-prediction mode from the plurality of reference sample arrays associated with the video block;
   perform a matrix-based intra-prediction (MIP) of the video block using the reference sample support of the intra-prediction mode; and

decode the video block based on the MIP of the video block.

2. A device for video encoding, comprising:
a processor configured to:

obtain a plurality of reference sample arrays associated with a video block;
determine an intra-prediction mode associated with the video block;
determine, based on a direction of the intra-prediction mode, a reference sample support of the intra-prediction mode from the plurality of reference sample arrays associated with the video block;
perform a matrix-based intra-prediction (MIP) of the video block using the reference sample support of the intra-prediction mode; and
encode the video block based on the MIP of the video block.

3. The device of claim 1 or claim 2, wherein the reference sample support consists of a plurality of primary reference samples associated with the intra-prediction mode, wherein the processor is further configured to determine an MIP matrix associated with the reference sample support, and wherein the MIP of the video block is performed further based on the MIP matrix.

4. The device of claim 1 or claim 2, wherein the video block is a first video block, the reference sample support is a first reference sample support, the intra-prediction mode associated with the first video block is a first positive intra-prediction mode, and the processor is further configured to:

obtain a plurality of reference sample arrays associated with a second video block;
determine, based on a direction of an intra-prediction mode associated with the second video block, a second reference sample support from the plurality of reference sample arrays associated with the second video block, wherein the intra-prediction mode associated with the second video block is a second positive intra-prediction mode; and
perform an MIP of the second video block using the second reference sample support.

5. The device of claim 1 or claim 2, wherein the video block is a first video block, the MIP is a first MIP, and the processor is further configured to:
perform a second MIP for a second video block, wherein the second MIP uses a full length or a half-length of a reference sample array associated with the second video block based on an intra-prediction mode associated with the second video block being a positive or negative intra-prediction mode.

6. The device of claim 5, wherein the intra-prediction mode associated with the first video block is a directional prediction mode, and the intra-prediction mode associated with the second video block is a DC prediction mode or a planar prediction mode.

7. The device of claim 5, wherein the intra-prediction mode associated with the first video block is a positive intra-prediction mode, and the intra-prediction mode associated with the second video block is a negative intra-prediction mode.

8. The device of any one of claims 5-7, wherein the processor is further configured to, based on a condition that the intra-prediction mode associated with the first video block is a positive intra-prediction mode, refrain from performing position dependent prediction compensation (PDPC) for the first video block after completing initial matrix multiplications associated with the first MIP.

9. The device of claim 5, wherein the processor is further configured to:

receive an indication that indicates whether the first MIP or the second MIP is to be used for a plurality of candidate modes in a most probably modes (MPM) list;
determine that the intra-prediction mode associated with the first video block is a candidate mode of the plurality of candidate modes in the MPM list; and
determine to use the first MIP for a prediction of the first video block based on the indication.

10. The device of claim 5, and the processor is further configured to:

receive an indication that indicates whether the first MIP or the second MIP is to be used in association with the intra-prediction mode associated with the first video block; and

based on the indication, determine to use the first MIP for the first video block.

11. The device of any one of claims 9-10, wherein the processor is further configured to, based on a condition that the intra-prediction mode associated with the first video block is a positive intra-prediction mode, refrain from performing position dependent prediction compensation (PDPC) for the first video block.

12. A method for video decoding, comprising:

obtaining a plurality of reference sample arrays associated with a video block;

determining an intra-prediction mode associated with the video block;

determining, based on a direction of the intra-prediction mode, a reference sample support of the intra-prediction mode from the plurality of reference sample arrays associated with the video block;

performing a matrix-based intra-prediction (MIP) of the video block using the reference sample support of the intra-prediction mode; and

decoding the video block based on the MIP of the video block.

13. A method for video encoding, comprising:

obtaining a plurality of reference sample arrays associated with a video block;

determining an intra-prediction mode associated with the video block;

determining, based on a direction of the intra-prediction mode, a reference sample support of the intra-prediction mode from the plurality of reference sample arrays associated with the video block;

performing a matrix-based intra-prediction (MIP) of the video block using the reference sample support of the intra-prediction mode; and

encoding the video block based on the MIP of the video block.

14. The method of claim 12 or claim 13, wherein the reference sample support consists of a plurality of primary reference samples associated with the intra-prediction mode, wherein the method further comprises determining an MIP matrix associated with the reference sample support, and wherein the MIP of the video block is performed further based on the MIP matrix.

15. The method of claim 12 or claim 13, wherein the video block is a first video block, the reference sample support is a first reference sample support, the intra-prediction mode associated with the first video block is a first positive intra-prediction mode, and the method further comprises:

obtaining a plurality of reference sample arrays associated with a second video block;

determining, based on a direction of an intra-prediction mode associated with the second video block, a second reference sample support from the plurality of reference sample arrays associated with the second video block, wherein the intra-prediction mode associated with the second video block is a second positive intra-prediction mode; and

performing an MIP of the second video block using the second reference sample support.

**FIG. 1**

EP 4 730 770 A1

FIG. 2

FIG. 3

EP 4 730 770 A1

FIG. 4

FIG. 5

predictor

Reference
samples

P0    P1    P2    P3    P4    P5

Prediction
direction

Target
pixel

EP 4 730 770 A1

**FIG. 6**

Support of reference samples
for prediction mode v

R(k,-1)

R(k+n-1,-1)

P(0,0)

Direction of Intra
prediction mode v

P(W-1,H-1)

Support of reference samples
for vertical mode

R(0,-1)

R(W-1,-1)

P(0,0)

Direction of vertical
mode (mode 50)

P(W-1,H-1)

**FIG. 7**

Support of reference samples
for prediction mode v

Support of reference samples
for mode 49

R(k+n-1,-1)

R(W-1,-1)

R(-1, -1)

P(W-1,0)

P(W-1,0)

Direction of Intra
prediction mode v

R(-1, k)

P(0,H-1)

P(0,H-1)

Direction of mode
49

**FIG. 8**

EP 4 730 770 A1

**EUROPEAN SEARCH REPORT**

Application Number

EP 24 30 6752

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/300325 A1 (AHN YONG JO [KR] ET AL) 21 September 2023 (2023-09-21) * paragraphs [0133] - [0141]; figures 8,10 * | 1-15 | INV. H04N19/105 H04N19/11 H04N19/159 H04N19/176 |
| A | US 2021/409719 A1 (WANG JUN [CN] ET AL) 30 December 2021 (2021-12-30) * paragraphs [0061] - [0066]; figures 6,7 * | 1-15 | H04N19/182 H04N19/593 |
| A | BUDAGAVI (TI) M ET AL: "Video coding technology proposal by Texas Instruments (and MIT)", 1. JCT-VC MEETING; 20100415 - 20100423; DRESDEN; (JOINT COLLABORATIVE TEAM ON VIDEO CODING OF ISO/IEC JTC1/SC29/WG11 AND ITU-T SG.16) , no. JCTVC-A101 11 April 2010 (2010-04-11), XP030232983, Retrieved from the Internet: URL:http://phenix.int-evry.fr/jct/doc_end_user/documents/1_Dresden/wg11/JCTVC-A101.zip JCTVC-A101.doc [retrieved on 2012-03-19] * page 4, paragraph 2.3 * | 1-15 | |

TECHNICAL FIELDS
SEARCHED (IPC)

H04N

The present search report has been drawn up for all claims

| Place of search | Date of completion of the search | Examiner |
|---|---|---|
| Munich | 1 April 2025 | Lombardi, Giancarlo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6752

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2025

| Patent document cited in search report | Publication date | Patent family member(s) | | Publication date |
|---|---|---|---|---|
| US 2023300325 A1 | 21-09-2023 | US | 2023300325 A1 | 21-09-2023 |
| | | WO | 2022119301 A1 | 09-06-2022 |
| US 2021409719 A1 | 30-12-2021 | CN | 113545087 A | 22-10-2021 |
| | | EP | 3930331 A1 | 29-12-2021 |
| | | US | 2021409719 A1 | 30-12-2021 |
| | | WO | 2020181474 A1 | 17-09-2020 |

EPO FORM P0459

For more details about this annex : see Official Journal of the European Patent Office, No. 12/82